# EUROPEAN PATENT SPECIFICATION

(11) **EP 2 796 575 B1**
(45) Date of publication and mention of the grant of the patent: **15.01.2020**
(21) Application number: 14173527.4
(22) Date of filing: 06.09.2007
(51) Int. Cl.: G21G 1/00, C22B 3/00, C22B 60/00, C22B 26/20

(54) **Method for the purification of radium from different sources**
Verfahren zur Reinigung von Radium aus verschiedenen Quellen
Procédé pour la purification du radium provenant de différentes sources

(30) Priority: 08.09.2006 DE 102006042191
(43) Date of publication of application: 29.10.2014
(62) Divisional of application: 07802184.7
(73) Proprietor: Actinium Pharmaceueuticals Inc., New York, NY 10016 (US)
(72) Inventor: Kabai, Eva, 85386 Eching (DE); Moreno Bermudez, Josue Manuel, 85737 Ismaning (DE); Henkelmann, Richard, 85354 Freising (DE); Türler, Andreas, 3072 Ostermundingen (CH)
(74) Representative: Winter, Brandl, Fürniss, Hübner, Röss, Kaiser, Polte - Partnerschaft mbB

(56) References cited:
- WO-A-98/55201
- WO-A2-2006/003123
- FR-A- 2 656 149
- FR-A- 2 698 362
- KR-A- 20030 068 711
- US-A1- 2005 211 955
- US-B1- 6 511 603
- F. Chabaux ET AL: "A new Ra-Ba chromatographic separation and its application to Ra mass-spectrometric measurement in volcanic rocks", CHEMICAL GEOLOGY., vol. 114, no. 3-4, 1 June 1994 (1994-06-01), pages 191-197, XP055466946, NL ISSN: 0009-2541, DOI: 10.1016/0009-2541(94)90052-3
- E. Philip Horwitz ET AL: "A NOVEL STRONTIUM-SELECTIVE EXTRACTION CHROMATOGRAPHIC RESIN*", SOLVENT EXTRACTION AND ION EXCHANGE., vol. 10, no. 2, 1 April 1992 (1992-04-01), pages 313-336, XP055465927, US ISSN: 0736-6299, DOI: 10.1080/07366299208918107

## Description

The present invention relates to a method for the purification of radium, in particular ²²⁶Ra, for target preparation for ²²⁵Ac production from available radioactive sources according to claim 1 as well as to a method for recycling of ²²⁶Ra, for target preparation for ²²⁵Ac production from radium sources irradiated with accelerated protons (p,2n), after separation of the produced ²²⁵Ac according to claim 11.

The investigations and experimental work of the present invention was carried out at the Technical University of Munich [TUM], Institute of Radiochemistry [RCM].

In particular, the radionuclide ²²⁵Ac can be successfully used in nuclear medicine - bound to tumor specific antibodies - in various clinical trials in the treatment of cancer, particularly in form of its daughter nuclide ²¹³Bi.

Already in 1993, criteria for the selection of radionuclides for immunotherapy with α-emitters and β-emitters were provided for the first time (GEERLINGS, M.W. (1993): Int. J. Biol. Markers, 8, 180-186: "Radionuclides for radioimmunotherapy: criteria for selection") where it turned out due to the difference in energy that the radioactivity of α-emitters to be applied may be more than 1000 times lower than that of β-emitters, if a comparable effect is to be achieved.

Moreover, in the above literature, the α-emitting radionuclides ²²⁵Ac and its daughter isotope ²¹³Bi turned out to be highly promising for the objects of radioimmunotherapy alongside the in principle usable, however relatively poorly available or instable antibody conjugate producing α-emitters: ²¹¹At, ²⁵⁵Fm, ²¹²Bi/²¹²Pb, ²²⁴Ra, ²³³Ra.

One of the fundamental studies for the foundation of a radioimmunotherapy with α-emitters is disclosed in GEERLINGS, M.W., KASPERSEN, F.M., APOSTOLIDIS; C. and VAN DER HOUT, R. (1993): Nuclear Medicine Communications 14, 121-125, "The feasibility of 225Ac as a source of α-particles in radioimmunotherapy". Here it is described that ²²⁵Ac produced from ²²⁹Th and the daughter isotope of ²²⁵Ac, namely ²¹³Bi is suitable as isotope for the radioimmunotherapy with α-emitters. As indications there are described in particular cancer treatment and the treatment of micrometastases of malign tumors using tumor-specific monoclonal antibodies as carriers for α-emitters.

A further study of KASPERSEN, F.M., BOS,E., DOORNMALEN, A.V., GEERLINGS, M.W., APOSTOLIDIS, C. and MOLINET, R. (1995): Nuclear Medicine Communications, 16, 468-476: "Cytotoxicity of 213Bi - and 225Ac -immunoconjugates" confirms and quantifies the cytotoxic effect of ²¹³Bi and ²²⁵Ac with in vitro tests using the human epidermoid tumor cell line A431.

Moreover, it is suggested to use ²¹³Bi for the treatment of malignant diseases of the blood system, and in the meantime, various radioimmunotherapeutic approaches with ²²⁵Ac and ²¹³Bi for the treatment of cancer are in various phases of clinical trials.

The medical-clinical significance of the present invention for the preparation of **²²⁵Ac** form **²²⁶Ra** by means of accelerated protons may be seen for example from two promising therapeutic approaches:
On the one hand, JURCIC, J.G., LARSON, S.M., SGOUROS, G., McDEVITT, M.R., FINN, R.D., DIVGI, C.R. Ǻse, M.B:, HAMACHER, K.A:, DANGSHE, M., HUMM, J.L., BRECHBIEL, M.W., MOLINET, R., SCHEINBERG, D.A. (2002) in Blood, 100, 1233-1239 report a significant success in the treatment of patients with acute myelogenous leukaemia (AML) and chronic myelogenous leukaemia (CML) by using ²¹³Bi, which is bound to HuM195, a formulation of a monoclonal anti-CD33-antibody, which was developed for the humane medicine. This study was the first proof-of-concept where a human being was treated with a systemic radioimmunotherapy comprising an α-emitter, which is transported to a tumor specific cellular target.

On the other hand, HUBER, R., SEIDL, C., SCHMID, E, SEIDENSCHWANG, S., BECKER; K.-F., SCHUMACHER; C., APOSTOLIDIS, C., NIKULA, T., KREMMER, E., SCHWAIGER, M. and SENEKOWITSCH-SCHMIDTKE, R. (2003): Clinical Cancer Research (Suppl.) 9, 1s-6s: "Locoregional α-Radioimmunotherapy of Intraperitoneal Tumor Cell Dissemination Using a Tumor-specific Monoclonal Antibody" report the therapeutic effectivity of ²¹³Bi-d9MAB - with low bone marrow toxicity - and the possible application of a locoregional therapy for patients who suffer from gastric carcinoma, who express d9-E-Cadherine.

More results of studies and partial aspects in this matter are shown in: Roswitha HUBER, doctorate dissertation in the Faculty of Veterinary Medicine submitted to the Ludwig-Maximilians-University of Munich, July 18, 2003: "Bewertung der lokoregionalen Radioimmuntherapie disseminierter Tumorzellen des diffusen Magenkarzinoms mit einem 213Bi gekoppelten tumorspezifischen Antikörper im Mausmodell" (Evaluation of a locoregional radioimmunotherapy of disseminated tumor cells of the diffuse gastric carcinoma with a ²¹³Bi bound tumor specific antibody in the mouse model).

According to HUBER 2003, each year 18 out of 100 000 Germans come down with gastric carcinoma alone. In Japan, even 126 out of 100 000 people are affected. This means about 156 000 incidences per year in Japan alone. There, as well as in China, Taiwan and Korea, gastric carcinoma is one of the most frequent causes of death in consequence of a tumor.

Up to now the application of cytostatica within a chemotherapy seemed to be the most promising therapeutic way however, the side effects are significant

The radioimmunotherapy, in contrast, uses protein structures located on the membrane, that are expressed by tumor cell lines in order to bind cytotoxic active substances via a carrier. Mostly, an overexpression of the binding molecule at the tumor cell is central to a radioimmunotherapy. The target molecule for the tumor associated antibodies is thus also expressed to a lower extend in physiologic cells of the organism. This implies that any therapeutic agent for radiotherapy also binds to these cells.

Particularly, in the treatment of acute or chronic myelogenous leukaemia the meaning of the present invention takes effect, namely for the preparation of a suitable α-emitter, namely ²²⁵Ac which forms through decay reaction the bound, for example, to a tumor specific antibody.

The ²¹³Bi atom decays via β-decay to ²¹³Po, which releases its α-decay energy of 8,4 MeV with a half life of 4 µs in the tissue within a distance of 80 µm when decaying and thus kills effectively cells in its immediate neighborhood due to its high linear energy transfer.

The so called locoregional application enables a quick binding of ²¹³Bi bound tumor specific antibody to the tumor antigens with maximal therapeutic success and minimal toxicity.

One of the few α-emitter which fulfill the relevant therapeutic criteria is the nuclide pair ²¹³Bi/²¹³Po with a half-life of 45,6 min (²¹³Bi). The photon emission of ²¹³Bi with 440 KeV additionally permits an in vivo scintiscanning of the patient.

Nowadays, accelerated proton irradiation of **²²⁶Ra** can be used to produce **²²⁵Ac**. In cyclotrons, developed for the first time 1931, electrically charged particles are moving on spiral shaped orbits in magnetic flux lines.

In particular, protons can be accelerated with the help of a cyclotron with currents that are high enough to such high velocities that they can be used in experimental and applied nuclear physics for the production of isotopes in a quantitative scale.

EP 0 752 709 B1 describes, for example, a method for producing actinium-225 from Radium-226, whereby accelerated protons are projected in a cyclotron onto a target of radium-226, so that the instable compound nucleus ²²⁷Ac is transformed into actinium-225 while emitting two neutrons (p,2n-reaction), whereby after a waiting period, during which the actinium-226, which has been created simultaneously due to the emission of only one neutron, decays mostly due to its considerably shorter half-life and actinium is chemically separated, so that a relatively pure isotope Ac-225 is obtained. The ²²⁶Ra target used according to the procedure of EP 0 752 709 B1 is not specified in detail there.

EP 0 962 942 A1 also describes a method for producing Ac-225 by irradiation of ²²⁶Ra with cyclotron accelerated protons having an energy of 10 to 20 MeV. Although it is already possible to achieve good actinium-225-yields with the targets according to EP 0 962 942 A1, it has turned out in practice that this target construction can heat itself under certain conditions due to the proton beam in such a way that the silver capsule tears open and might thus both destroy the target and contaminate the peripheral compounds.

In order to solve these target problems, the inventors of the present inventions have designed two different improved radium targets for the production of radionuclides by means of accelerated protons, on the basis of the prior art of EP 0 962 942 A1.

The one target preparation, a method of electrodeposition of ²²⁶Ra-material is disclosed in Applicant's DE 103 47 459 B3, the other one, an evaporation-dispensing system, is disclosed in Applicant's DE 10 2004 022 200 A1.

Applicant's methods of target preparation provide the finally desired ²²⁵Ac-product on an Aluminum surface, and in a mixture of different radionuclides.

Nevertheless, the final product contains unconverted ²²⁶Ra and other Ra isotopes. In addition, different decay products of actinium occur as well as nuclear conversions of contaminating elements such as Al.

Impurities in the Al mesh measured by kₒ-Based Neutron Activation Analysis (kₒINAA) are given in Table 1:

**Table 1**

| Element | Content [µg/g] | Element | Content [µg/g] |
|---|---|---|---|
| Fe | 1302 | La | 0.69 |
| Cr | 701 | W | 0.2 |
| Ni | 0.2 | Sb | 0.07 |
| Ga | 145 | Th | 0.18 |
| Zn | 39 | Br | 0.11 |
| Na | 9 | Sm | 0.08 |
| Mo | 3.5 | As | 0.06 |
| U | 1.3 | Sc | 0.02 |
| Co | 2.0 | Au | 0.002 |
| Ce | 1.8 | | |

Particularly important is to minimize the content of Sr and Ba which lead to the production of radioisotopes of Y and La, respectively.

The typical main chemical impurities in the radium available from radioactive ampoules used in the experiments (claimed as secondary standards) is given in Table 2.

**Table 2**

| ELEMENT | mgₗ/mg_{Ra}* |
|---|---|
| Ba | 0.63 |
| Ca | 0.59 |
| Na | 0.46 |
| Zn | 0.08 |

| | |
|---|---|
| * mgl/mgRa - mg impurity per mg radium | |

Several radioisotopes are produced as a result of nuclear reactions type (p,n) or (p,2n) on impurities like Ba, Ca, Fe, Zn, Sr, Pt, V, Ti, Cr, Mg, Mn, Na and Cu which can be present in the Al carrier (foil, mesh) and/or in the Ra deposit. The radionuclides of major contribution to the total gamma activity excluding ²²⁶Ra and daughters are typically the following: ⁵⁵Co, ⁵⁶Co, ⁶⁷Ga, ⁵⁷Ni, ⁵¹Cr, ⁴⁸V, ⁵²Mn, ⁵⁴Mn, ⁶⁵Zn.

In addition, disturbing radiochemical impurities are ²¹⁰Po and ²¹⁰Pb resulting from the following decay chain: **Ra-226 (alpha).** →Rn-222(alpha) →Po-218 (alpha) →Pb-214 (beta)→Bi-214 (beta)→Po-214 (alpha)→**Pb-210 (beta)**→Bi-210 (beta)→**Po-210 (alpha)** →Pb-206 (stable).

To summarize, however, despite the already optimized target systems as provided by Applicant's DE 103 47 459 B3 and DE 10 2004 022 200 A1, the final ²²⁵Ac-product still contains significant amounts of inorganic, radionuclidic and organochemical impurities, which render the obtained ²²⁵Ac product unsuitable for direct medical or pharmaceutical application. A purification of the ²²⁵Ac product is suggested in the not prepublished German patent application DE 10 2006 008 023.8-43 filed on 21.02.2006 by the Applicant of the present application, and having the title "Method for Purification of ²²⁵Ac from Irradiated ²²⁶Ra-Targets".

Moreover starting from pure radium as raw material, the contaminations in the produced actinium can be significantly reduced.

The general aspects of the radioanalytical separation of radium were formerly summarized by KIRBY H.W. and SALUTSKY M.L (1964) "The radiochemistry of radium", NAS-NS-3057.

Between the known procedures can be found those applying Mme CURIE's classical method based on co-precipitation (with barium sulphate) for isolating radium from pitchblende and fractional crystallization for separating radium from its chemical homologue barium (CURIE M. -Nobel Lecture 1911, Stockholm). The same procedure was used to revise the atomic mass of radium by HÖNIGSCHMID O. (1911) Mitteilungen aus dem Institute für Radiumforschung - "Revision des Atomgewichtes des Radiums und Herstellung von Radiumstandardpräparaten" and HÖNIGSCHMID O. and SACHTLEBEN R. (1934), - Z. anorg. u. allg. Chem, Bd. 221, S. 65-82 supported by GERLACH W. and RIEDL E. (1934), - Z. anorg. u. allg. Chem, Bd 221, S. 103-108. Others were using the precipitation method with concentrated nitric acid. The disadvantage of this method is due to the difficulty in handling fumic nitric acid. Later on, other precipitation agents were also more or less successfully applied like oxalate, carbonate or chromate (SALUTSKY M.L. and STITES J.G (1955), - Ind. Eng. Chem., Vol. 47 No. 10, pp. 2162-2166).

All these tedious classical methods have the disadvantage that the complete isolation of radium is only possible after several repetitions of the mentioned procedure but allow the isolation of high quantities of radium. For example is well known that Mme Curie isolated the radium after hundred and more fractional crystallization steps.

Afterwards, new chemical methods were tested and successfully applied for separation/concentration of small amounts of radium in a more efficient way. In-between can be found chromatography, ion exchange, organic extraction or extraction chromatography.

The use of one of these modern methods for separation/purification of radium is described in several scientific works like those of TOMPKINS E.R. (1948), - J. Am Chem Soc. Vol 70, No. 10, pp. 3520-3522, POWER W.H. et al. (1959), - Anal. Chem. Vol. 31, No 6, 1077-1079, NELSON F. (1964), - J. Chromat. 16, pp. 403, CHIARIZIA R. et al. (1995), - Solv Extr. Ion. Exch. 13 (6) 1063-1082, WLODZIMIRSKA B., BARTOS B., BILEWITZ A. (2003), - Radiochim. Acta 91, 9, MOON D.S., BURNETT B. (2003), - Appl. Rad. Isot 59, pp. 288, HAGERMANN F. (1950), - J. Am Chem, Soc. 72 p768, BURNETT W., CABLE P. (1995), - Radioactivity and Radiochemistry Vol. 6, No. 3, pp 36-44 etc.

Due to its chemical properties, one of the frequently used methods for radium purification from the above mentioned ones is the cation exchange chromatography. The difficulty of the radium purification procedure based on cation exchange is due to the limitations regarding the eluting agents. Usually this method implies the use of complexing agents to facilitate the separation and increase the decontamination factors. In VDOVENKO V.M. and DUBASOV Y.U. (1973), "Analytical chemistry of radium", John Wiley & Sons, GLEASON G. (1980), "An improved ion exchange procedure for the separation of barium from radium", Ann. Arbor Science Publishers Inc. pp. 47-50 and SAMUELSON O. (1963), "Ion exchange separations in analytical chemistry", John Wiley & Sons as well as TOMPKINS E.R. (1951), US-554649 this type of purification with complexing agents is well detailed.

The main difference between the enumerated classical and modern separation techniques is the amount of radium used for testing. The classical methods were successfully applied on high amounts of radium while the modern methods were generally tested for trace or low level radium contents.

F. Chabaux et al., Chemical Geology 114 (1994), p. 191-197 discloses a method for Ra-Ba chromatographic separation and its application to Ra mass-spectrometric measurement in volcanic rocks.

US 6 511 603 B1 discloses an extractant medium for extracting alkaline earth cations from an aqueous acidic sample solution as well as a method and apparatus for using the same.

WO 2006/003123 A2 discloses methods of production of radionuclides.

In this particular application, the final form of the radium (up to 100 mg level) used for target preparation is preferably an acidic solution in HNO₃, free from any complexing agent. Thus, the proposed purification step based on cation exchange omits any use of such complexing agents.

This method of the purification of radium is based on the retention of radium on a special cation exchange resin and elution of the possible contaminants. Formerly in van der WALT T.N. and STRELOW F.W.E. (1983), Anal. Chem. Vol. 55, pp.212-216 as well as in STRELOW F.W.E. (1985), -Anal. Chem. Vol. 57, pp. 2268-2271 it was demonstrated the usefulness of these resins for other purposes.

In the present invention this step was successfully tested to purify radium until some milliCuries, while the extraction chromatographic method was applied until hundreds of micrograms of radium.

The use of a mixed extractant solvent including the crown ethers "BOB-CalixC6" and "DtBu18C6" for extracting cesium-137 and strontium-90 from acidic liquid wastes is disclosed in US 2005/0211955 A1.

Starting from the above explained problem of possible radium impurities, it is the object of the present invention to provide radium, and in particular ²²⁶Ra, with a purity, suitable for cyclotron target preparation for ²²⁵Ac production from available radioactive sources.

This problem is solved by a method for the purification of radium, in particular ²²⁶Ra, for target preparation, particularly cyclotron target preparation, for ²²⁵Ac production from available radioactive sources, comprising the following steps:
a) detecting the quality of the Ra material to be purified;
b) leaching out Ra with a mineral acid from its storage vessel at least one time;
c) pooling Ra leachings, wherein the pooled leachings are concentrated and a redissolved in a minimum volume of a mineral acid;
d) carrying out a first extraction chromatography in order to separate chemically similar elements such as Ba, Sr, and Pb from the desired Ra;
e) wherein said extraction chromatography in step d) is carried out on a solid support material having an extractant system coated thereon, comprising at least one compound in accordance with general formula I in at least one compound in accordance with general formula II,

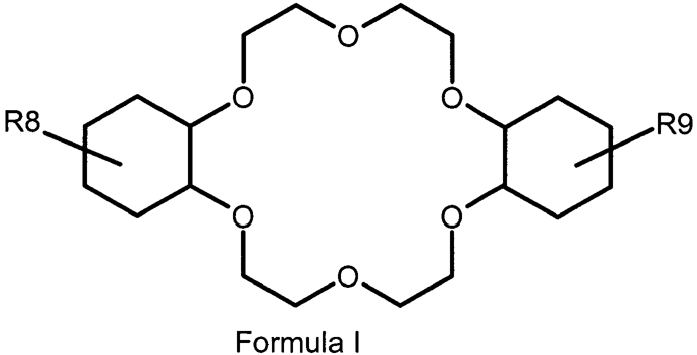

   R10-OH Formula II

   wherein in formula I:
      R8 and R9 independently is H, C₁ - C₆ alkyl, or t-butyl; and
   wherein in formula II:
      R10 is C₄ to C₁₂ alkyl; and wherein HNO₃ or HCI is used as mobile phase;
e) recovering Ra from the early fractions, whereas Ba and Sr are contained in fractions with higher retention time and the Pb is retained on the extractant system;
f) pooling Ra fractions;
g) concentrating the purified Ra-containing fractions; and
h) wherein a decay product ²²²Rn is removed from the Ra material.

According to the present invention, the Pb is retained on the extractant and can only be removed using high concentrated HCI or complexing agents such as EDTA.

In a preferred method according to the invention, wherein HN0₃, in particular 0.1 M HNO₃ is used for the accomplishment of step b) and/or in step e) HNO₃ or HCI is used as said mobile phase in a concentration range of 0.1 M to 4 M, in particular 1 M. An appropriate tool for concentration of Ra-containing starting or stock solutions is a rotary evaporator.

Dried or highly concentrated residues are redissolved in a minimum volume of a mineral acid, in particular HNO₃, preferably 0.1 M HNO₃ .

In a preferred embodiment of the present invention, the natural decay product ²²²Rn is removed from the Ra material, in particular during an evaporation step. Such an evaporation step is e.g. the evaporation within a rotary evaporator. As Rn retaining medium activated carbon traps are used.

In practice, a method using an extractant system having a crown ether in accordance with formula III has proven to be advantageous: 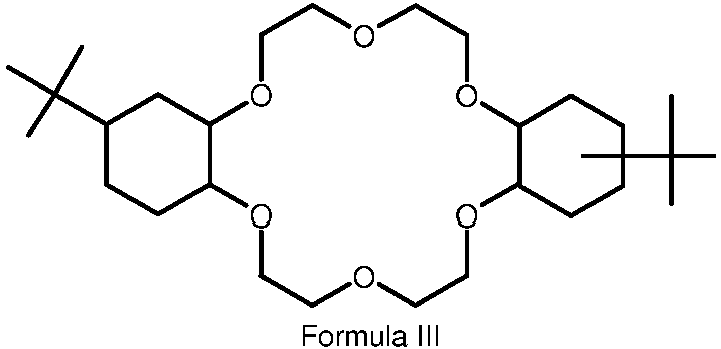 in 1-octanol.

A particularly preferred extractant system is 4,4'-bis(t-butylcyclohexano)-18-crown-6 in 1-octanol.

Another preferred extractant system is 4,5'-bis(t-butylcyclohexano)-18-crown-6 in 1-octanol.

In practice, it is preferred to use a commercially available resin such as "Sr Resin" made by EICHROM, the extractant in the stationary phase is a crown ether: 4, 4'(5')-bis(t-butylcyclohexano)-18-crown-6 in 1-octanol.

The detection of the quality of the Ra material is carried out by γ-spectrometry, in particular in situ γ-spectrometry, and by Inductively Coupled Plasma Optical Emission Spectroscopy (ICP-OES).

Purified Ra-fractions of the extraction chromatography are conveniently concentrated by evaporation to dryness, in particular by means of a spiral-line heater or silicon heater.

It is a further object of the present invention to provide an effective method for recycling of ²²⁶Ra, for cyclotron target preparation for ²²⁵Ac production from radium targets irradiated with accelerated protons (p,2n), after separation of the produced 225Ac.

This problem is solved by a method comprising the following steps:
a) detecting the quality of a Ra-containing solution to be purified being provided in a mineral acid solution;
b) concentrating the Ra-containing solution by evaporation;
b1) wherein a decay product ²²²Rn is removed from the Ra material;
c) removing trace amounts of organic compounds by means of a prefilter column wherein said prefilter column is an inert solid support material.
d) carrying out at least one cation exchange chromatography in order to separate the Ra from the main chemical contaminants,
   wherein said cation exchange chromatography in step d) is carried out on an acidic cation exchanger, and preferably on an acidic macroporous type cation exchanger.
e) washing the cation exchange resin with low molar mineral acid to remove the main chemical contaminants;
f) eluting Ra from the cation exchange resin with high molar mineral acid being 0.5 to 10 M wherein such fractions still contain chemically similar elements such as Ba and Sr;
g) pooling and concentrating the partially purified Ra fractions; and
h) subjecting the partially purified Ra-containing fractions to at least one extraction chromatography, wherein said extraction chromatography step is carried out on a solid support material having an extractant system coated thereon, comprising at least one compound in accordance with general formula I in at least one compound in accordance with general formula II, 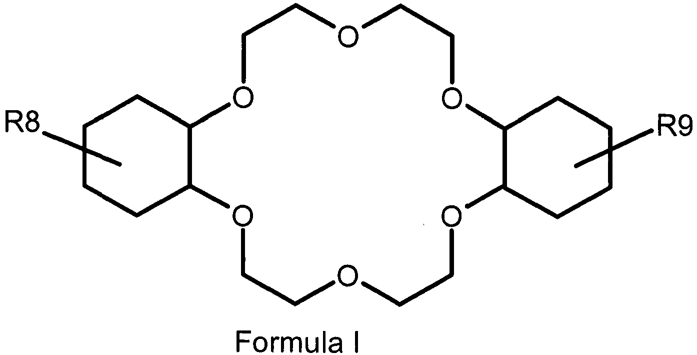 R10-OH Formula II

   wherein in formula I:
      R8 and R9 independently is H, C₁ - C₆ alkyl, or t-butyl; and
   wherein in formula II:
      R10 is C₄ to C₁₂ alkyl; and wherein HNO₃ or HCI is used as mobile phase;
i) recovering Ra from the early fractions, whereas Ba and Sr are contained in fractions with higher retention time;
j) pooling Ra fractions; and
k) concentrating the purified Ra-containing fractions.

In a method according to the present invention, the Ra in step a) of the Ra recycling is provided in HCI or HNO₃, in particular, HNO₃ within a concentration range of 0.1 M to 4 M or HCI within a concentration range of 0.1 to 4 M and/or in step h) HNO₃ or HCI is used as said mobile phase in a concentration range of 0.1 M to 4 M, in particular 1 M.

In a preferred method according to the invention, the main chemical contaminants are selected from the group consisting of Ag, Al, As, Be, Bi, Ca, Cd, Co, Cr, Cu, Fe, Ga, K, Li, Mg, Mn, Na, Ni, Pb, Sr, V, Zn, as well as mixtures thereof.

It is advantageous to carry out the concentration steps by evaporation, in particular by means of a rotary evaporator and/or by means of a spiral-line heater or silicon heater.

In a preferred method of the present invention the decay product ²²²Rn is removed from the ²²⁶Ra material, in particular during an evaporation step using activated carbon traps.

To elute the Ra from the used cation exchange resin, a high molar mineral acid, with a concentration range of 2 to 10 M, in particular, 3 to 8 M, preferably about 4 M, and as preferred mineral acid, HNO₃ is used.

A suitable cation exchange material is based on a cation exchanger being an acidic cation exchange resin in accordance with the following formula, and preferably an acidic macroporous type cation exchanger 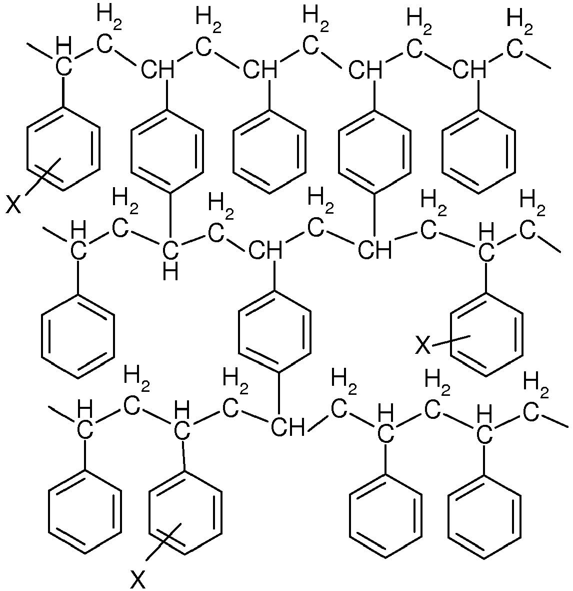 wherein in the above Formula : X is SO₃⁻H⁺.

In practice, for the cation exchange step it is preferred to use a commercially available resin such as "AG-MP50" resin from Bio-Rad Laboratoires, Inc.

After the cation exchange step, it is a preferred embodiment of the present invention concerning the Ra recycling to use an extractant system in form of a crown ether in accordance with formula III, for the further purification: 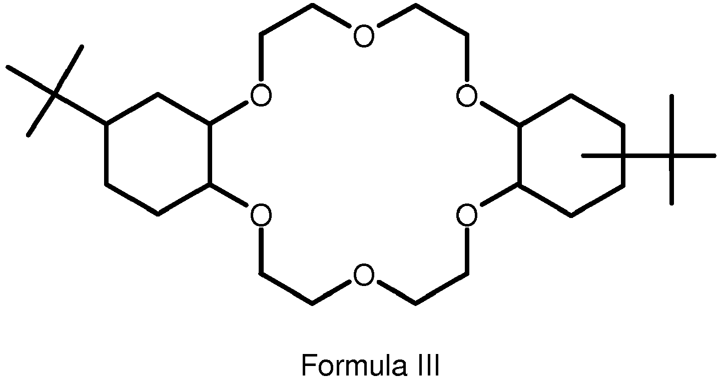 in 1-octanol.

Using this system, it is a preferred embodiment of the present invention to use as extractant system 4,4'-bis(t-butylcyclohexano)-18-crown-6 in 1-octanol or 4,5'-bis(t-butylcyclohexano)-18-crown-6 in 1-octanol.

It is further preferred that the solid support in feature h) is selected from the group consisting of, porous silica, inert organic polymers, preferably an acrylic ester non-ionic polymer.

For the irradiation of radium compounds completely capsulated in a metallic target cup sufficient amounts of radium have to be available with adequate quality. The procedure regarding the target preparation per se is already known by WO 2005/105160, WO 2005/039647, EP1673492. To cover the needs of radium, two sources of radium were used: from existing (available) radioactive sources and from recycling after irradiation of radium at the cyclotron and it's separation from actinium.

The procedure of the present invention describes a method aiming to prepare/purify radium either from existing radioactive sources or from irradiated recycled radium. The purified radium has to correspond to the quality which allows its subsequent irradiation.

The radiochemical procedures which is proposed for the present application comprises the following:
i. Preparation of ²²⁶Ra from existing radioactive sources for target preparation;
ii. Separation of the irradiated radium from the target support material (aluminium) and from most of the activation products by cation exchange chromatography;
iii. Purification of Ra from other impurities which can interfere with the quality of the final product **²²⁵Ac**: like Ba or Sr, using extraction chromatography;
iv. Quality control of the prepared/purified Ra fraction.

The invention refers to a procedure for the purification of ²²⁶Ra in order to prepare radium targets for cyclotron irradiation. It comprises the following steps:
- Purification/recycling of Ra-226
   - from available radioactive sources
   - from irradiated radium targets;
- Implementation of the separation/purification procedure for high activity samples. This is assuming the (almost) complete automation of the radiochemical process to minimize the manual handling of highly radiotoxic radium;
- Quality control of the prepared/purified radium.

The purification of the radium has to be done in a way which allows obtaining good recovery and high decontamination factors for the main contaminants. The purification procedure has to cover the separation of Ra from the aluminium as target support material, from the main contaminants resulting from activation and from contaminants which can influence the quality of the actinium (like Ba or Sr).

Further advantages and features are given by describing examples as well as the accompanying drawings.
- Fig. 1.: shows a general scheme of the production of ²²⁵Ac via ²²⁶Ra(p,2n) ²²⁵Ac reaction;
- Fig. 2.: shows a preparation/purification scheme for ²²⁶Ra from available radioactive sources in accordance with the invention;
- Fig. 3.: shows an elution profile of Ra and Ba on an Sr resin column from 1 M HNO₃, 3.5x0.8cm, BV ∼ 2 mL
- Fig. 4.: shows the recycling of radium from irradiated radium targets in schematic view;
- Fig. 5.: shows gamma spectra of the irradiated radium fraction before recycling; and
- Fig. 6.: shows gamma spectra of the irradiated radium fraction after recycling according to the invention

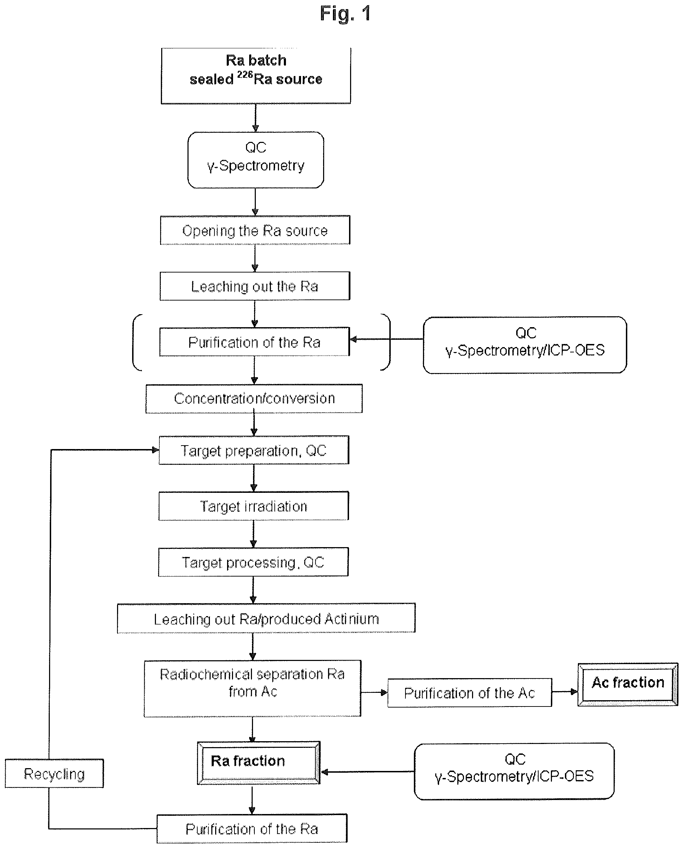

The general scheme of the production of actinium via ²²⁶Ra(p,2n) ²²⁵Ac reaction is shown in Fig.1.

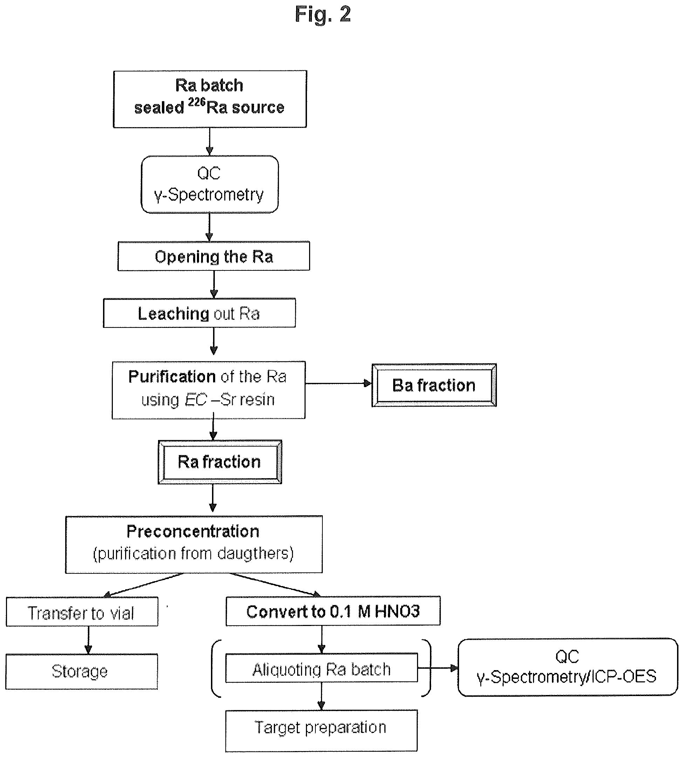

A flow chart of the separation of Ra from the main activation products is presented in Fig 2.

For the purpose of producing ²²⁵Ac via p,2n reaction with accelerated protons, the radium as target material has to correspond to very high purity; otherwise the amount of the obtained activation products among the produced actinium will increase dramatically after irradiation. Therefore, one of the primary goals in the present invention is to provide radium as pure as possible for radium targets preparation in order to minimize the quantity of possible contaminants/impurities.

To obtain radium with very high purity level there are two possibilities which will be illustrated in the Examples below:

### Examples

### A. Procedure for the preparation of ²²⁶Ra from available radioactive sources

The general scheme of the radium preparation procedure from available radioactive sources in accordance to the present invention is shown in Fig. 2.

The commercially available radium sources at Curie or milliCurie level have various degrees of chemical and radionuclidic purity. The better the purity of the initial material is, the simpler the preparation/purification procedure. The quality management (QM) consists in an initial check of the radium purity and activity. Therefore, after the receipt of the radioactive material, a first quality control (QC) measurement is made, based on gamma spectrometry which allows an estimate of the total activity of radium and the main radionuclidic impurities. Working with mCi or higher levels of Ra the fastest way to check the activity given in the specification is by in-situ gamma-spectrometric measurements.

After the estimation of the activities of **²²⁶Ra** and the main radioisotopic impurities- if any - the samples are opened in a hermetically closed shielded glove-box. As for many of the radioactive sources, one of the common approaches to transport/store them is in dry form in closed glass ampoules. The radium sources closed in glass ampoules are opened and the radioactive material is leached out quantitatively from such ampoules. The opening of the ampoules is done using two different approaches: by crashing the ampoules or by cutting and pouring out the dry radioactive material in order to leach the dried radium salt with diluted HNO₃(GDCh conf: Kabai et al., 2005). Similar approaches were applied for analysis of I-129 or Tc-99 by Kabai et al. (2003) and for determination of Lu-177 impurities by Pawlak et al (2004) aiming to open ampoules with radioactive materials and wash out the radioactive component.

After the radium is leached out from an ampoule and dissolved in a minimum volume of 0.1 M HNO₃, it is concentrated by evaporation in a rotary-evaporator and converted to the nitrate form. For closed radium sources the formed ²²²Rn is in equilibrium with the mother nuclide ²²⁶Ra. The presence of radon along with radium has to be avoided as much as possible because it is the main contributor to the effective dose which has to be minimized. Therefore, the evaporation step is also used for removing the formed radon.

Hereby, the evaporation of the radium is carried out in a safe closed system. Before release, the evacuated air is passed through two consecutive charcoal traps in order to retain the radon inside the glove-box, minimizing the amount of radon released.

In order to control the chemical purity of the radium, a small aliquot is taken from the solution sent to the rotary-evaporator.

This aliquot is diluted further and a quality control sample is analysed by spectrometric methods. The Inductively Coupled Plasma Optical Emission Spectroscopy (ICP-OES) method was found to be suitable for this analysis having enough sensitivity for all the chemical contaminants expected in the radium solution.

The sample is concentrated close to dryness and it is re-dissolved in a few millilitres of 0.1 M HNO₃. Then the solution is transferred to a V-vial by using high purity argon.. The last step it is repeated two-three times in order to wash out all the radium from the flask of the rotary-evaporator. The shielded V-vial containing the radium solution is evaporated to dryness using a spiral-line heater or a silicon heater. The V-Vial is closed with a phenolic cap, placed in a lead container and the activity of radium is estimated based on the second in-situ gamma-measurement. The so quantified radium in the thick wall V-vial is used for cyclotron target preparation or else sent to storage.

For the target preparation the V-Vial with the desired activity is opened again, and the radium salt dissolved in 0.1 M HNO₃ .

After complete homogenisation the solution is transferred to a dispenser. The dosage of the radium solution for target preparation is controlled through the dispenser. The V-vial is washed two times with a few mL of 0.1 M HNO₃ in order to minimize the losses on the wall of the vial.

Table 2 as mentioned before, shows the typical ratios of impurities to radium obtained from radium ampoules. The main inactive impurities are Na, Ca, Ba and Zn while the radioisotopic purity is very high, usually more than 99 %. Only different activities of radium daughters could be measured in the gamma-spectra, depending on the time elapsed since the last radon evacuation.

If the radium had worse quality parameters, one-step purification would be applied based on Sr resin aiming to remove especially the barium present near the radium. In this case the radium is loaded in 1 M HNO₃ on a small Sr resin column (bedvolume- BV∼ 2 mL) before complete drying in V-Vial. The radium is collected in BV 1- 4 then the barium has higher retention times and it occurs in the BV 5-10. The Sr will be retained on the column.

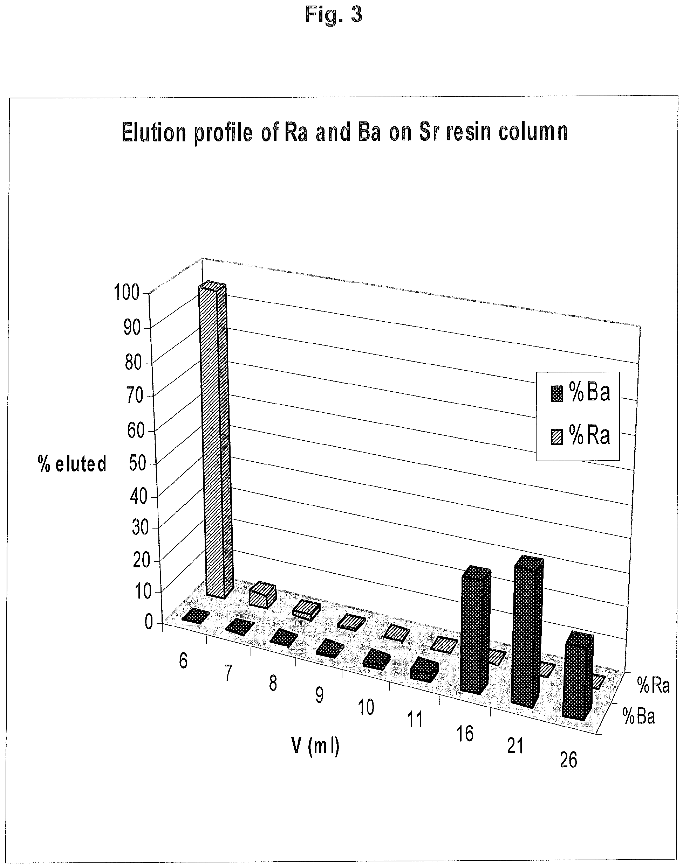

The elution profile of Ra and Ba on Sr resin column from 1 M HNO₃, 3.5x0.8 cm, BV ∼ 2 mL is shown in Fig. 3.

This purification step was successfully applied for radium amounts up to levels of several hundred micrograms.

### B. Procedure for recycling of ²²⁶Ra from irradiated radium targets

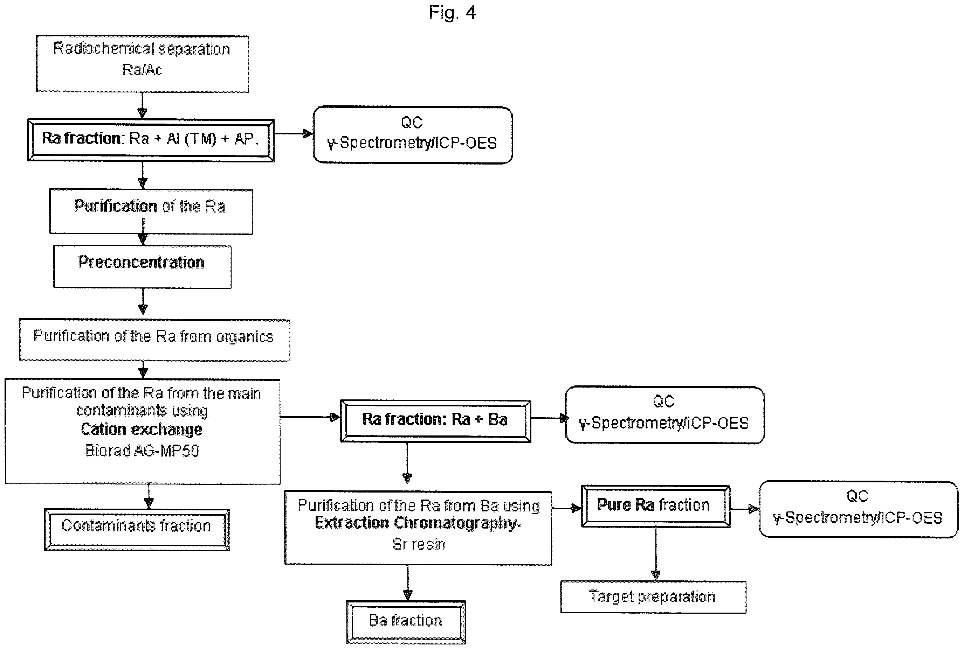

Another possibility to obtain pure radium is from recycling the radium, already being irradiated with accelerated protons for **²²⁵Ac** production. This approach is more complicated than the previous due to the fact that the irradiated radium has a much lower grade of purity than the original material. The general scheme of the applied radium recycling procedure is represented in Fig 4.

The procedure as developed is based on the chemical and radioisotopic composition of the radium fraction after the separation from actinium. The main chemical and radioisotopic contaminants present in the radium fraction after irradiation and separation from actinium - in particular in accordance with DE 10 2006 008 023.8 - are summarised in the Table 3 which shows the ratios of the corresponding element to the radium.

**Table 3**

| Main chemical contaminants typically present in the irradiated radium fraction after the separation from actinium before recycling (mass ratios relative to the radium) | | | |
|---|---|---|---|
| **Element** | **mg Contam/mg Ra** | **Element** | **mg Contam/mg Ra** |
| Ag | 0.06 | K | 3.01 |
| Al | 172.2 | Li | 0.02 |
| As | 0.15 | Mg | 7.69 |
| Ba | 0.81 | Mn | 1.16 |
| Be | 0.06 | Na | 3.27 |
| Bi | 0.13 | Ni | 3.20 |
| Ca | 0.94 | Pb | - |
| Cd | 0.04 | Rb | - |
| Co | 0.42 | Se | - |
| Cr | 0.15 | Sr | 0.09 |
| Cu | 0.57 | TI | - |
| Fe | 0.80 | U | - |
| Ga | - | V | - |
| In | - | Zn | 1.79 |

Starting from this composition and from the radioisotopic impurities present in the radium fraction, the objective of the present invention regarding the recycling is to provide a combined procedure based on a multi-step purification scheme which allows the separation of the radium from the contaminants according to Table 3. The proposed procedure is based upon a cation exchange combined with extraction chromatography.

In the present application, the final form of the radium used for target preparation is preferably an acidic solution in HNO₃, free from any complexing agent. Thus, the proposed purification step based on cation exchange omits any use of such complexing agents.

In this procedure, after the separation of produced ²²⁵Ac from irradiated radium, the radium fraction in 2 M HNO₃ is evaporated in order to concentrate it. Then the concentrated radium solution, which might contain some organic contaminants, is passed through a prefilter column (an inert solid support material) to remove trace amount of organic compounds. The cation exchange step included immediately after the prefilter column allows the separation of the radium from the main chemical contaminants like aluminium as target support material, Mg, Co, Ni, Zn and Fe. For this the original solution is first converted to 0.1 M HCI. Then the solution is passed through the Biorad AG-MP50 cation exchange resin. The resin is an acidic macroporous type cation exchange resin with high effective surface, approx 35 % porosity and a nominal capacity of 1.5 meq/mL. Therefore, it has higher retention properties than a normal cation exchange resin. Thanks to these properties, the radium up to several mCi-s could be easily retained on 5-6 mL bed volume column from 0.1 M HCl media. Afterwards, the column is intensively washed with HCl having different molarities in order to elute any possible contaminant retained on the column. Finally, the strongly retained radium is eluted with approximately 150 mL 4 M HNO₃ solution.

The results show that under these experimental conditions the recovery of the radium is higher than 90 %. The obtained decontamination factors for Al are 10³, for transitional metals 10². In order to increase the decontamination factors of the contaminants relative to the radium a second column identical with the previous is introduced in the procedure. In this way it was possible to obtain high decontamination factors for all the transition metals. After the radium is eluted from the second column in 4 M HNO₃, it is evaporated until wet residues and is re-dissolved in 1 M HNO₃. Next, the radium in 1 M HNO₃ is used as feeding solution for an extraction chromatographic column filled with Sr resin (EICHROM). This resin allows the separation of the radium from barium and trace amount of strontium still present in the radium fraction.

The Ba is chemically similar to the radium. Therefore, it is very difficult to separate it on a cation exchange resin. The extraction chromatography gave the inventors the opportunity to separate radium from the barium usually present near the radium in the samples and to separate any strontium detected among radium. The separation on Sr resin was conducted with radium-barium mixtures up to several hundred micrograms.

The obtained chemical composition after the recycling process using two cation exchange columns and one Sr resin column is shown in Table 4. Based on these results can be concluded that the chemical purity of the radium was substantially improved during the multi-step procedure and it is comparable with that of the original, not irradiated radium.

**Table 4**

| Main chemical contaminants typically present in the irradiated radium fraction after the separation from actinium and recycling (mass ratios relative to the radium) | | | |
|---|---|---|---|
| **Element** | **Imp/Ra [mg/mg]** | **Element** | **Imp/Ra [mg/mg]** |
| Ag | 0.06 | K | - |
| Al | 0.15 | Li | - |
| As | - | Mg | 0.03 |
| Ba | 0.04 | Mn | 0.01 |
| Be | 0.02 | Na | 4.43 |
| Bi | - | Ni | 0.03 |
| Ca | 0.63 | Pb | - |
| Cd | 0.02 | Rb | - |
| Co | 0.01 | Se | - |
| Cr | 0.04 | Sr | 0.02 |
| Cu | 0.03 | TI | - |
| Fe | 0.06 | U | - |
| Ga | - | V | - |
| In | - | Zn | 006 |

It is evident that including more steps in the process, the quality of the radium can be further improved, but in the same time the recovery of the radium will decrease. To avoid this fact the presented radiochemical procedure will be tested for the separation of several milligrams of radium.

### C. Implementation of the separation/purification procedure for high activity samples

To obtain the required amount of ²²⁵Ac, hundreds of milligrams of radium have to be involved in the process. Working with the highly radiotoxic radium at hundred milligrams level is possible only with careful planning of the radiochemical processes. In order to minimize the exposure of the personnel, all the involved radiochemical processes has to be automated.

The automation of the radiochemical processes is realised taking into account the above described schemes and details.

The implementation of the automation process is done based on the intensive collaboration of the Institute of Radiochemistry with the Institute for Machine Tools and Industrial Management (*iwb*)*,* both of the Technical University of Munich. In this respect, a continuous work is put into the automation plans of the radium preparation and recycling, respectively.

### D. Quality control (QC) of the purified/recycled radium

The quality management of the product - actinium but also of the raw material, in this case of the radium is very important. The quality of the starting material will influence not only the quality and the yield of produced actinium but will define the radiochemical procedure applied for the recycling of the irradiated radium. Therefore, additional effort was put in the quality control (QC) of the used radium as starting material but also during the purification/recycling process. QC was used at the beginning of the process to extend the characterization/prove the quality of the radium sources given in the official specification. Later on the quality control was done in order to verify the process efficiency.

In the QC the main aspects covered:
- the purity: including the chemical and radioisotopic purity, and
- the recovery of the purified/recycled radium.

The first aspect was conducted in order to assure that the purity of the radium is high enough to be safely irradiated by accelerated protons, and assure that the presence of different contaminants/impurities will not set back the yield of the irradiation and the post irradiation treatments, respectively. Towards the purity check the radionuclidic and chemical purity analysis were performed.

From the point of view of the technique the radionuclidic purity of the radium from available radioactive sources was done by in-situ gamma-spectrometric measurements of the whole sample or by taking a small aliquot of the sample. For the identification of the main chemical contaminants/impurities the same aliquot was analysed using Inductively Coupled Plasma - Optical Emission Spectrometry (ICP-OES). This method was used successfully to identify the chemical impurities expected in the radium fraction.

The second aspect - the recovery of the radium - is as much important as the first one. Due to the application of the multi-step radiochemical procedure, it is unavoidable to lose radium during the process. In order to minimize the losses, the applied procedures should be as simple as possible, comprising the minimum number of steps necessary to achieve the purity requirements. The recovery of the radium was verified during the process by gamma-spectrometry.

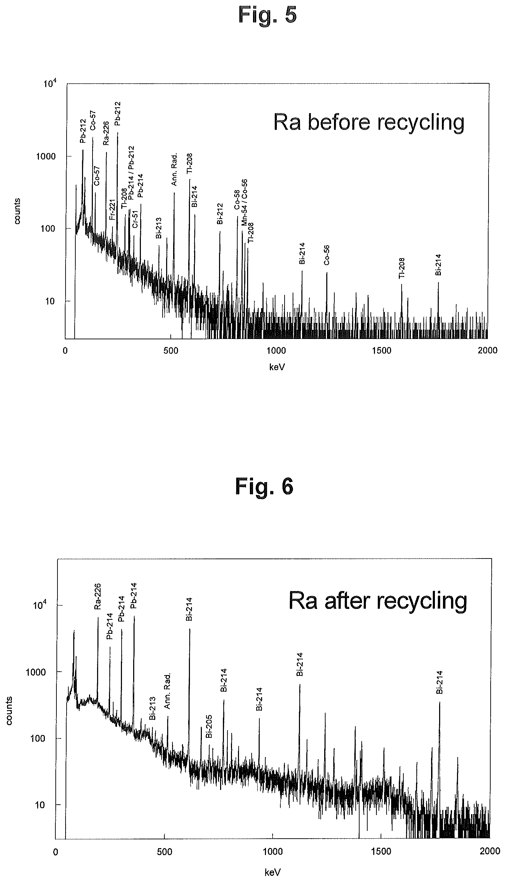

Fig. 5 and 6 show the typical gamma-spectra of the radium fraction before and after recycling. From the spectra could be observed that the originally present radioisotopes of the transitional metals: ⁵⁵Co, ⁵⁶Co, ⁵⁷Co, ⁶⁷Ga, ⁵⁷Ni, ⁵¹Cr, ⁴⁸V, ⁵²Mn, ⁵⁴Mn, and ⁶⁵Zn were well separated after applying the above detailed radiochemical procedure. Other detected isotopes in the spectra of Fig. 5, such as ²⁰⁸TI, ²¹²Pb and ²²¹Fr are shortliving (half lifes from minutes to hours) isotopes which are not relevant for the further purification. The typical radioisotopic purity of the radium obtained by using the above described procedure was higher than 99 %.

In the spectra of Figs. 5 and 6 "Ann. Rad." means "annihilation radiation".

## Claims

1. Method for the purification of Radium, in particular ²²⁶Ra, for target preparation for ²²⁵Ac production from available radioactive sources, comprising the following steps:
a) detecting the quality of the Ra material to be purified wherein the detection of the quality of the Ra material is carried out by γ-spectrometry and by Inductively Coupled Plasma Optical Emission Spectroscopy, ICP-OES;
b) leaching out Ra with a mineral acid from its storage vessel at least one time;
c) pooling Ra leachings, wherein the pooled leachings are concentrated and are redissolved in a minimum volume of a mineral acid;
d) carrying out a first extraction chromatography in order to separate chemically similar elements such as Ba, Sr, and Pb from the desired Ra;
e) wherein said extraction chromatography in step d) is carried out on a solid support material having an extractant system coated thereon, comprising at least one compound in accordance with general formula I in at least one compound in accordance with general formula II, 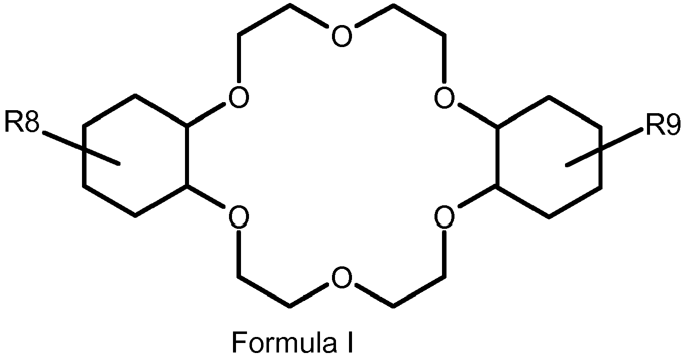
R10-OH Formula II
wherein in formula I:
R8 and R9 independently is H, C₁ - C₆ alkyl, or t-butyl; and
wherein in formula II:
R10 is C₄ to C₁₂ alkyl; and wherein HNO₃ or HCI is used as mobile phase;
f) recovering Ra from the early fractions, whereas Ba and Sr are contained in fractions with higher retention time; and Pb is retained on the extractant system;
g) pooling Ra fractions;
h) concentrating the purified Ra-containing fractions; and
i) wherein a decay product ²²²Rn is removed from the Ra material.

2. Method according to claim 1, wherein diluted HNO₃, in particular 0.1 M HNO₃ is used for the accomplishment of step b).

3. Method according to claim 1 or 2, wherein in step e) HNO₃ or HCI is used as said mobile phase in a concentration range of 0.1 M to 4 M, in particular 1 M.

4. Method according to anyone of the preceding claims, wherein the solid support in feature e) is selected from the group consisting of, porous silica, inert organic polymers, preferably an acrylic ester non-ionic polymer.

5. Method according to anyone of the preceding claims, wherein the mineral acid of step c) is HNO₃, preferably 0.1 M HNO₃.

6. Method according to anyone of the preceding claims, wherein said decay product ²²²Rn is removed from the Ra material during an evaporation step using activated carbon traps.

7. Method according to anyone of the preceding claims, wherein the extractant system is a crown ether in accordance with formula III: 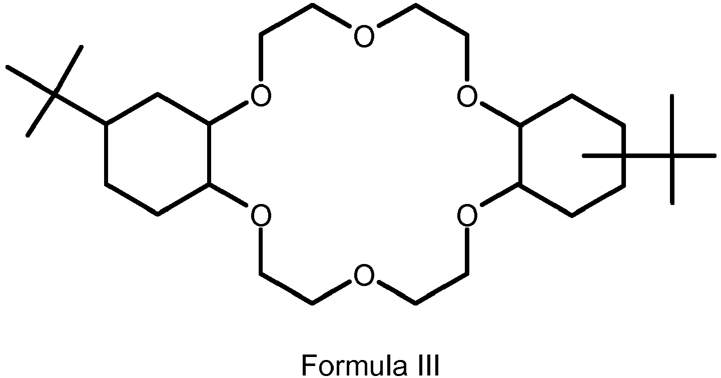 in 1-octanol.

8. Method according to claim 7, wherein the extractant system is 4,4'-bis(t-butylcyclohexano)-18-crown-6 in 1-octanol or is 4,5'-bis(t-butylcyclohexano)-18-crown-6 in 1-octanol.

9. Method according to anyone of the preceding claims, wherein the purified Ra-fractions of the extraction chromatography are concentrated by evaporation to dryness or wet residues, in particular by means of an evaporator.

10. Method for recycling of ²²⁶Ra, for target preparation for ²²⁵Ac production from radium sources irradiated with accelerated protons (p,2n), after separation of the produced ²²⁵Ac, comprising the following steps:
a) detecting the quality of a Ra-containing solution to be purified being provided in a mineral acid solution;
b) concentrating the Ra-containing solution by evaporation;
b1) wherein a decay product ²²²Rn is removed from the Ra material;
c) removing trace amounts of organic compounds by means of a prefilter column wherein said prefilter column is an inert solid support material;
d) carrying out at least one cation exchange chromatography in order to separate the Ra from the main chemical contaminants, wherein said cation exchange chromatography in step d) is carried out on an acidic macroporous cation exchanger;
e) washing the cation exchange resin with low molar mineral acid to remove the main chemical contaminants;
f) eluting Ra from the cation exchange resin with high molar mineral acid being 0.5 to 10 M wherein such fractions still contain chemically similar elements such as Ba and Sr;
g) pooling and concentrating the partially purified Ra fractions; and
h) subjecting the partially purified Ra-containing fractions to at least one extraction chromatography, wherein said extraction chromatography step is carried out on a solid support material having an extractant system coated thereon, comprising at least one compound in accordance with general formula I in at least one compound in accordance with general formula II, 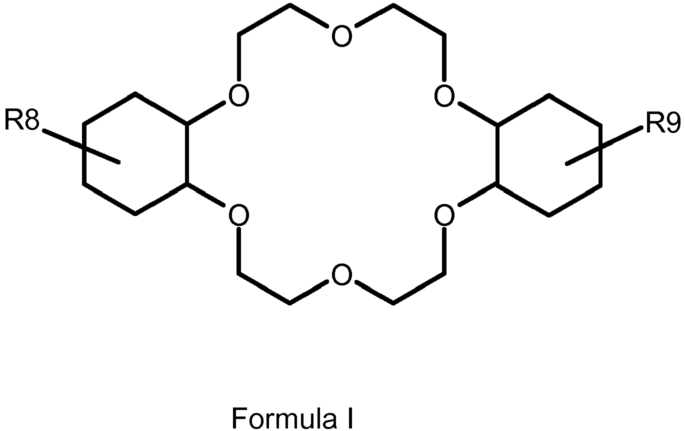
R10-OH Formula II
wherein in formula I:
R8 and R9 independently is H, C₁ - C₆ alkyl, or t-butyl; and
wherein in formula II:
R10 is C₄ to C₁₂ alkyl; and wherein HNO₃ or HCI is used as mobile phase,
i) recovering Ra from the early fractions, whereas Ba and Sr are contained in fractions with higher retention time;
j) pooling Ra fractions; and
k) concentrating the purified Ra-containing fractions.

11. Method according to claim 10, wherein the Ra in step a) is provided in HCI or HNO₃, in particular, HNO₃ within a concentration range of 0.5 M to 4 M or HCI within a concentration range of 0.5 M to 4 M.

12. Method according to claim 10 or 11, wherein in step h) HNO₃ or HCI is used as said mobile phase in a concentration range of 0.1 M to 4 M, in particular 1 M.

13. Method according to anyone of claims 10 to 12, wherein the main chemical contaminants are selected from the group consisting of Ag, Al, As, Be, Bi, Ca, Cd, Co, Cr, Cu, Fe, Ga, K, Li, Mg, Mn, Na, Ni, Pb, Sr, V, Zn, as well as mixtures thereof.

14. Method according to anyone of claims 10 to 13, wherein the high molar mineral acid is 1 to 8 M, preferably 2 to 6 M, more preferably about 4 M, and as preferred mineral acid, HNO₃ is used.

15. Method according to anyone of claims 10 to 14, wherein the cation exchanger is an acidic macroporous type cation exchange resin in accordance with the following formula: 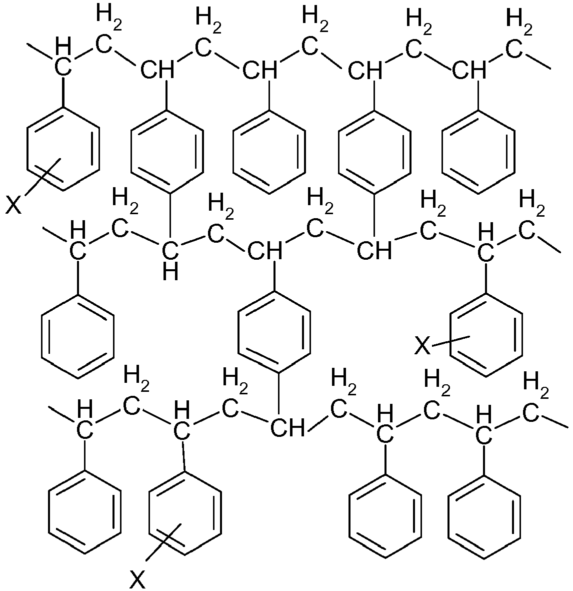 wherein X is SO₃⁻H⁺.

16. Method according to anyone of claims 10 to 15 wherein the extractant system is a crown ether in accordance with formula III: 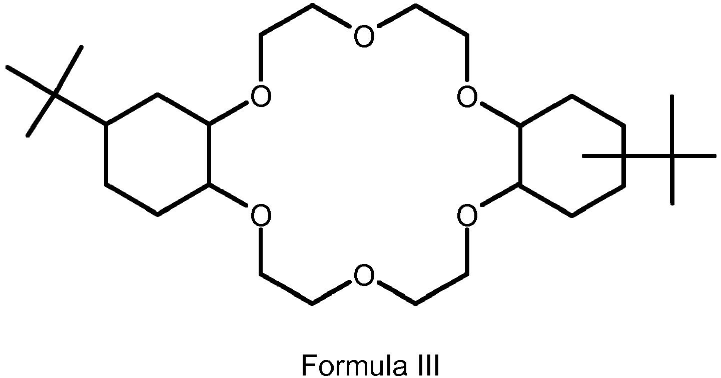 in 1-octanol.

17. Method according to claim 16, wherein the extractant system is 4,4'-bis(t-butylcyclohexano)-18-crown-6 in 1-octanol or is 4,5'-bis(t-butylcyclohexano)-18-crown-6 in 1-octanol.

18. Method according to anyone of claims 10 to 17, wherein the solid support in feature h) of claim 10 is selected from the group consisting of, porous silica and inert organic polymers, preferably an acrylic ester non-ionic polymer.

19. Method according to anyone of claims 10 to 18, wherein said concentration steps are carried out by evaporation, and wherein said decay product ²²²Rn is removed from the Ra material using activated carbon traps.

## Patentansprüche

1. Verfahren zur Reinigung von Radium, insbesondere ²²⁶Ra, zur Targetherstellung für die Produktion von ²²⁵Ac aus verfügbaren radioaktiven Quellen, umfassend die folgenden Schritte:
a) Erfassen der Qualität des zu reinigenden Ra-Materials, wobei die Erfassung der Qualität des Ra-Materials durchgeführt wird mittels γ-Spektrometrie und optischer Emissionsspektrometrie mit induktiv gekoppeltem Plasma, ICP-OES;
b) mindestens einmaliges Auslaugen von Ra mit einer Mineralsäure aus seinem Aufbewahrungsbehälter;
c) Poolen der Ra-Laugen, wobei die gepoolten Laugen konzentriert und in einem Mindestvolumen einer Mineralsäure wieder gelöst werden;
d) Durchführen einer ersten Extraktionschromatographie, um chemisch ähnliche Elemente wie Ba, Sr und Pb von dem gewünschten Ra abzutrennen;
e) wobei die Extraktionschromatographie in Schritt d) durchgeführt wird auf einem festen Trägermaterial mit einem darauf aufbeschichteten Extraktionssystem, umfassend mindestens eine Verbindung gemäß der allgemeinen Formel I in mindestens einer Verbindung gemäß der allgemeinen Formel II, 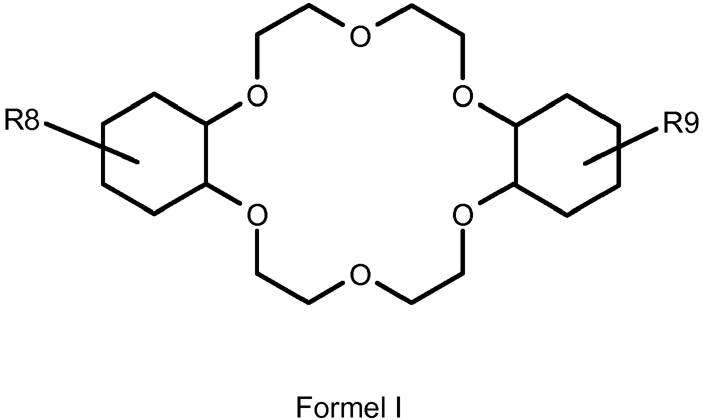
R10-OH Formel II
wobei in Formel I:
R8 und R9 unabhängig gleich H, C₁-C₆-Alkyl oder t-Butyl sind; und
wobei in Formel II:
R10 gleich C₄- bis C₁₂-Alkyl ist, und wobei HNO₃ oder HCl als mobile Phase verwendet wird;
f) Rückgewinnen von Ra aus den frühen Fraktionen, während Ba und Sr in Fraktionen mit höherer Retentionszeit enthalten sind und Pb auf dem Extraktionssystem zurückgehalten wird;
g) Poolen der Ra-Fraktionen;
h) Konzentrieren der gereinigten Ra-haltigen Fraktionen; und
i) wobei ein Zerfallsprodukt ²²²Rn aus dem Ra-Material entfernt wird.

2. Verfahren nach Anspruch 1, wobei zur Durchführung von Schritt b) verdünnte HNO₃, insbesondere 0,1 M HNO₃ verwendet wird.

3. Verfahren nach Anspruch 1 oder 2, wobei in Schritt e) HNO₃ oder HCl als die mobile Phase in einem Konzentrationsbereich von 0,1 M bis 4 M, insbesondere 1 M, verwendet wird.

4. Verfahren nach einem der vorhergehenden Ansprüche, wobei der feste Träger im Merkmal e) ausgewählt ist aus der Gruppe bestehend aus porösem Siliciumdioxid, inerten organischen Polymeren, vorzugsweise einem nichtionischen Acrylesterpolymer.

5. Verfahren nach einem der vorhergehenden Ansprüche, wobei die Mineralsäure von Schritt c) HNO₃, vorzugsweise 0,1 M HNO₃, ist.

6. Verfahren nach einem der vorhergehenden Ansprüche, wobei das Zerfallsprodukt ²²²Rn während eines Eindampfschritts unter Verwendung von Aktivkohlefallen aus dem Ra-Material entfernt wird.

7. Verfahren nach einem der vorhergehenden Ansprüche, wobei das Extraktionssystem ein Kronenether gemäß Formel III: 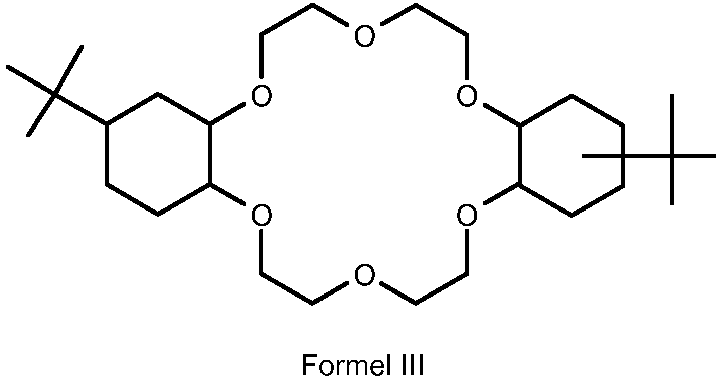 in 1-Octanol ist.

8. Verfahren nach Anspruch 7, wobei das Extraktionssystem 4,4'-Bis(t-butylcyclo-hexan)-18-Krone-6 in 1-Octanol oder 4,5'-Bis(t-butylcyclohexan)-18-Krone-6 in 1-Octanol ist.

9. Verfahren nach einem der vorhergehenden Ansprüche, wobei die gereinigten Ra-Fraktionen der Extraktionschromatographie durch Eindampfen bis zur Trockenheit oder zu nassen Rückständen, insbesondere mittels eines Verdampfers, konzentriert werden.

10. Verfahren zum Recyceln von ²²⁶Ra zur Targetherstellung für die Produktion von ²²⁵Ac aus mit beschleunigten Protonen (p, 2n) bestrahlten Radiumquellen nach Abtrennung des hergestellten ²²⁵Ac, umfassend die folgenden Schritte:
a) Erfassen der Qualität einer zu reinigenden Ra-haltigen Lösung, die in einer Mineralsäurelösung zur Verfügung gestellt wird;
b) Konzentrieren der Ra-haltigen Lösung durch Eindampfen;
b1) wobei ein Zerfallsprodukt ²²²Rn aus dem Ra-Material entfernt wird;
c) Entfernen von Spurenmengen organischer Verbindungen mittels einer Vorfiltersäule, wobei die Vorfiltersäule ein inertes festes Trägermaterial ist;
d) Durchführen mindestens einer Kationenaustauschchromatographie, um das Ra von den chemischen Hauptverunreinigungen abzutrennen, wobei die Kationenaustauschchromatographie in Schritt d) auf einem sauren makroporösen Kationenaustauscher durchgeführt wird;
e) Waschen des Kationenaustauscherharzes mit niedermolarer Mineralsäure, um die chemischen Hauptverunreinigungen zu entfernen;
f) Eluieren von Ra aus dem Kationenaustauscherharz mit hochmolarer Mineralsäure von 0,5 bis 10 M, wobei diese Fraktionen immer noch chemisch ähnliche Elemente wie Ba und Sr enthalten;
g) Poolen und Konzentrieren der teilweise gereinigten Ra-Fraktionen; und
h) Unterziehen der teilweise gereinigten Ra-haltigen Fraktionen mindestens einer Extraktionschromatographie, wobei der Extraktionschromatographieschritt durchgeführt wird auf einem festen Trägermaterial mit einem darauf aufbeschichteten Extraktionssystem, umfassend mindestens eine Verbindung gemäß der allgemeinen Formel I in mindestens einer Verbindung gemäß der allgemeinen Formel II, 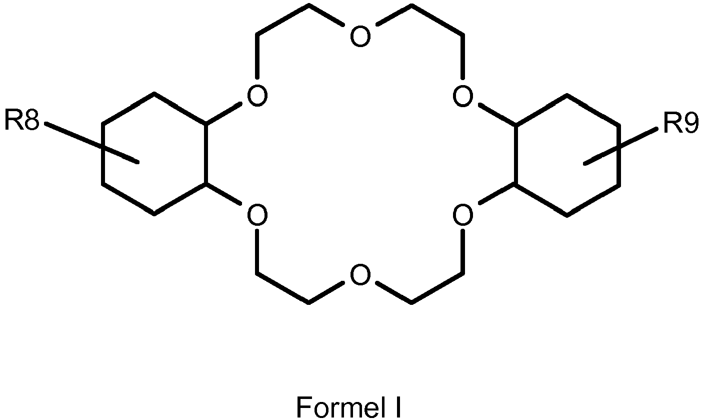
R10-OH Formel II
wobei in Formel I:
R8 und R9 unabhängig gleich H, C₁-C₆-Alkyl oder t-Butyl sind; und
wobei in Formel II:
R10 gleich C₄ bis C₁₂-Alkyl ist, und wobei HNO₃ oder HCl als mobile Phase verwendet wird;
i) Rückgewinnen von Ra aus den frühen Fraktionen, während Ba und Sr in Fraktionen mit höherer Retentionszeit enthalten sind;
j) Poolen der Ra-Fraktionen; und
k) Konzentrieren der gereinigten Ra-haltigen Fraktionen.

11. Verfahren nach Anspruch 10, wobei das Ra in Schritt a) in HCl oder HNO₃ zur Verfügung gestellt wird, insbesondere HNO₃ in einem Konzentrationsbereich von 0,5 M bis 4 M oder HCl in einem Konzentrationsbereich von 0,5 M bis 4 M.

12. Verfahren nach Anspruch 10 oder 11, wobei in Schritt h) HNO₃ oder HCl als die mobile Phase in einem Konzentrationsbereich von 0,1 M bis 4 M, insbesondere 1 M, verwendet wird.

13. Verfahren nach einem der Ansprüche 10 bis 12, wobei die chemischen Hauptverunreinigungen ausgewählt sind aus der Gruppe bestehend aus Ag, Al, As, Be, Bi, Ca, Cd, Co, Cr, Cu, Fe, Ga, K, Li, Mg, Mn, Na, Ni, Pb, Sr, V, Zn sowie Mischungen daraus.

14. Verfahren nach einem der Ansprüche 10 bis 13, wobei die hochmolare Mineralsäure 1 bis 8 M, vorzugsweise 2 bis 6 M, besonders bevorzugt etwa 4 M ist und als bevorzugte Mineralsäure HNO₃ verwendet wird.

15. Verfahren nach einem der Ansprüche 10 bis 14, wobei der Kationenaustauscher ein saures Kationenaustauscherharz vom makroporösen Typ gemäß der folgenden Formel ist: 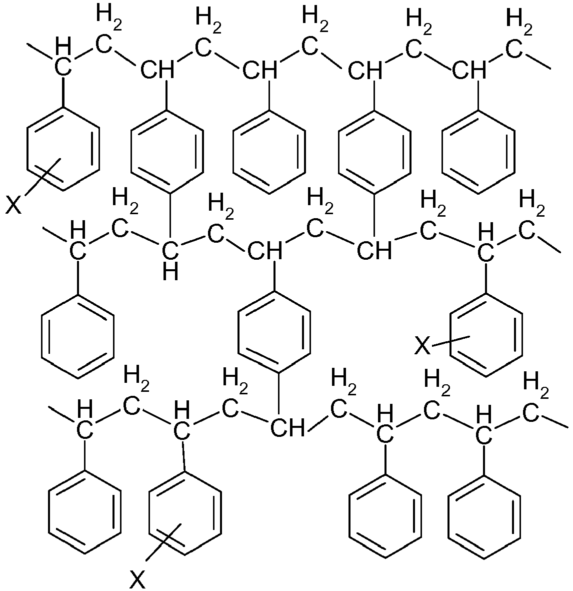 wobei X gleich SO₃⁻H⁺ ist.

16. Verfahren nach einem der Ansprüche 10 bis 15, wobei das Extraktionssystem ein Kronenether gemäß Formel III: 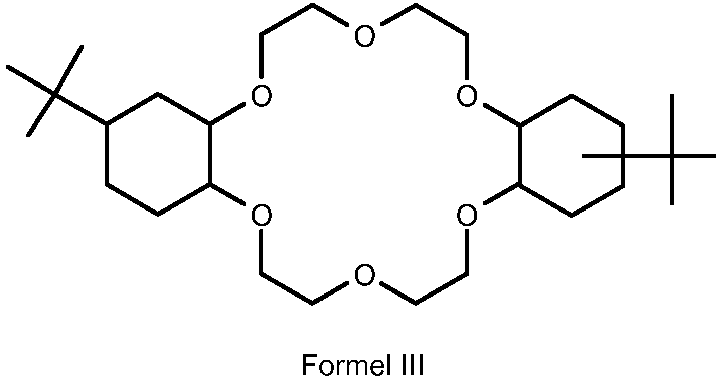 in 1-Octanol ist.

17. Verfahren nach Anspruch 16, wobei das Extraktionssystem 4,4'-Bis(t-butylcyclo-hexan)-18-Krone-6 in 1-Octanol oder 4,5'-Bis(t-butylcyclohexan)-18-Krone-6 in 1-Octanol ist.

18. Verfahren nach einem der Ansprüche 10 bis 17, wobei der feste Träger in Merkmal h) des Anspruchs 10 ausgewählt ist aus der Gruppe bestehend aus porösem Siliciumdioxid und inerten organischen Polymeren, vorzugsweise einem nichtionischen Acrylesterpolymer.

19. Verfahren nach einem der Ansprüche 10 bis 18, wobei die Konzentrationsschritte durch Eindampfen ausgeführt werden und wobei das Zerfallsprodukt ²²²Rn unter Verwendung von Aktivkohlefallen aus dem Ra-Material entfernt wird.

## Revendications

1. Procédé de purification de radium, en particulier du ²²⁶Ra, pour la préparation d'une cible pour la production de ²²⁵Ac à partir de sources radioactives disponibles, comprenant les étapes suivantes :
a) la détection de la qualité du matériau de Ra à purifier dans lequel la détection de la qualité du matériau de Ra est effectuée par spectrométrie γ et par spectrométrie d'émission optique à plasma à couplage inductif, ICP-OES ;
b) la lixiviation du Ra avec un acide minéral à partir de son récipient de stockage au moins une fois ;
c) le regroupement des lixiviats de Ra, dans lequel les lixiviats regroupés sont concentrés et sont redissous dans un volume minimal d'un acide minéral ;
d) la mise en œuvre d'une première chromatographie d'extraction afin de séparer les éléments chimiquement similaires tels que Ba, Sr, et Pb du Ra souhaité ;
e) dans lequel ladite chromatographie d'extraction dans l'étape d) est effectuée sur un matériau de support solide sur lequel est revêtu un système d'agent d'extraction, comprenant au moins un composé selon la formule générale I dans au moins un composé selon la formule générale II, 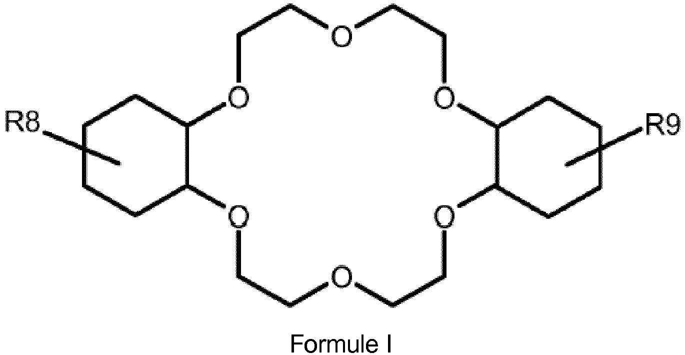
R10-OH Formule II
dans laquelle dans la formule I :
R8 et R9 sont indépendamment H, un alkyle en C₁ à C₆, ou un t-butyle ; et
dans laquelle dans la formule II :
R10 est un alkyle en C₄ à C₁₂ ; et dans lequel HNO₃ ou HCl est utilisé comme phase mobile ;
f) la récupération du Ra à partir des premières fractions, tandis que Ba et Sr sont contenus dans des fractions ayant un temps de rétention plus long ; et Pb est retenu sur le système d'agent d'extraction ;
g) le regroupement des fractions de Ra ;
h) la concentration des fractions contenant du Ra purifié ; et
i) dans lequel un produit de désintégration ²²²Rn est éliminé du matériau de Ra.

2. Procédé selon la revendication 1, dans lequel du HNO₃ dilué, en particulier du HNO₃ 0,1 M est utilisé pour la réalisation de l'étape b).

3. Procédé selon la revendication 1 ou 2, dans lequel dans l'étape e) du HNO₃ ou du HCl est utilisé en tant que ladite phase mobile dans une plage de concentrations allant de 0,1 M à 4 M, en particulier 1 M.

4. Procédé selon l'une quelconque des revendications précédentes, dans lequel le support solide dans la caractéristique e) est sélectionné dans le groupe consistant en une silice poreuse, les polymères organiques inertes, de préférence un polymère non ionique d'ester acrylique.

5. Procédé selon l'une quelconque des revendications précédentes, dans lequel l'acide minéral de l'étape c) est HNO₃, de préférence HNO₃ 0,1 M.

6. Procédé selon l'une quelconque des revendications précédentes, dans lequel le produit de désintégration ²²²Rn est éliminé du matériau de Ra lors d'une étape d'évaporation en utilisant des pièges à charbon actif.

7. Procédé selon l'une quelconque des revendications précédentes, dans lequel le système d'agent d'extraction est un éther couronne selon la formule III : 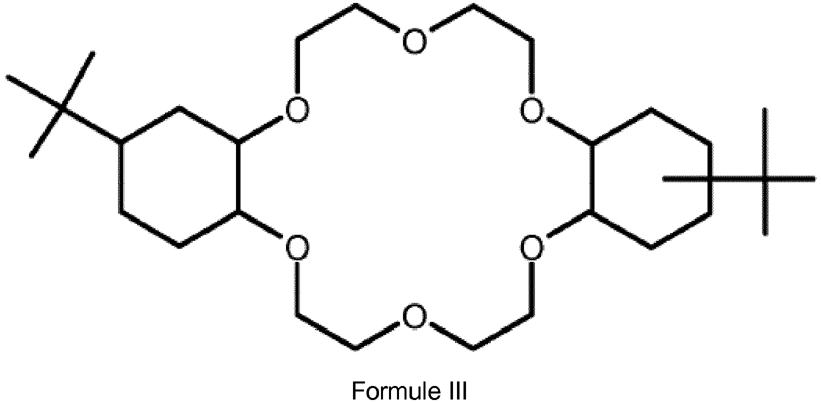 dans le 1-octanol.

8. Procédé selon la revendication 7, dans lequel le système d'agent d'extraction est le 4,4'-bis(t-butylcyclohexano)-18-crown-6 dans le 1-octanol ou est le 4,5'-bis(t-butylcyclohexano)-18-crown-6 dans le 1-octanol.

9. Procédé selon l'une quelconque des revendications précédentes, dans lequel les fractions de Ra purifié de la chromatographie d'extraction sont concentrées par évaporation jusqu'à siccité ou des résidus humides, en particulier au moyen d'un évaporateur.

10. Procédé de recyclage de ²²⁶Ra, pour la préparation d'une cible pour la production de ²²⁵Ac à partir de sources de radium irradiées par des protons accélérés (p, 2n), après séparation du ²²⁵Ac produit, comprenant les étapes suivantes :
a) la détection de la qualité d'une solution contenant du Ra à purifier qui est fournie dans une solution d'acide minéral ;
b) la concentration de la solution contenant du Ra par évaporation ;
b1) dans lequel un produit de désintégration ²²²Rn est éliminé du matériau de Ra ;
c) l'élimination des traces de composés organiques au moyen d'une colonne de préfiltrage dans lequel ladite colonne de préfiltrage est un matériau de support solide inerte ;
d) la mise en œuvre d'au moins une chromatographie par échange de cations afin de séparer le Ra des principaux contaminants chimiques, dans lequel ladite chromatographie par échange de cations dans l'étape d) est effectuée sur un échangeur de cations macroporeux acide ;
e) le lavage de la résine échangeuse de cations avec un acide minéral à faible molarité pour éliminer les principaux contaminants chimiques ;
f) l'élution du Ra à partir de la résine échangeuse de cations avec un acide minéral à molarité élevée qui est de 0,5 à 10 M dans lequel ces fractions contiennent encore des éléments chimiquement similaires tels que Ba et Sr ;
g) le regroupement et la concentration des fractions de Ra partiellement purifié ; et
h) la soumission des fractions contenant du Ra partiellement purifié à au moins une chromatographie d'extraction, dans lequel ladite étape de chromatographie d'extraction est effectuée sur un matériau de support solide sur lequel est revêtu un système d'agent d'extraction, comprenant au moins un composé selon la formule générale I dans au moins un composé selon la formule générale II, 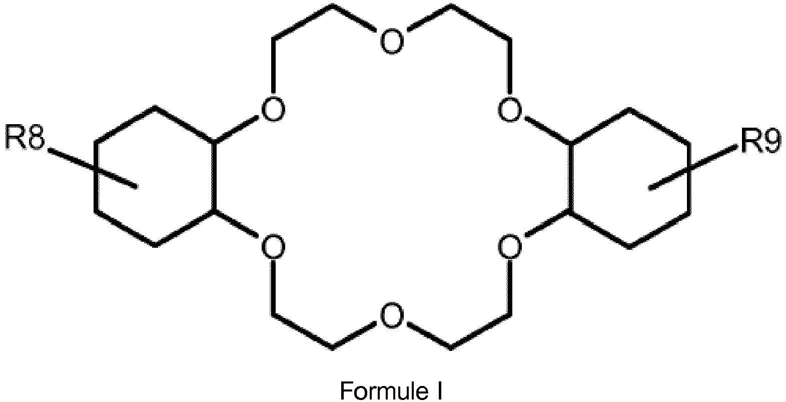 R10-OH Formule II
dans laquelle dans la formule I :
R8 et R9 sont indépendamment H, un alkyle en C₁ à C₆, ou un t-butyle ; et
dans laquelle dans la formule II :
R10 est un alkyle en C₄ à C₁₂ ; et dans lequel HNO₃ ou HCl est utilisé comme phase mobile,
i) la récupération du Ra à partir des premières fractions, tandis que Ba et Sr sont contenus dans des fractions ayant un temps de rétention plus long ;
j) le regroupement des fractions de Ra ; et
k) la concentration des fractions contenant du Ra purifié.

11. Procédé selon la revendication 10, dans lequel le Ra dans l'étape a) est fourni dans du HCl ou du HNO₃, en particulier, du HNO₃ dans une plage de concentration allant de 0,5 M à 4 M ou du HCl dans une plage de concentration allant de 0,5 M à 4 M.

12. Procédé selon la revendication 10 ou 11, dans lequel dans l'étape h) du HNO₃ ou du HCl est utilisé en tant que ladite phase mobile dans une plage de concentrations allant de 0,1 M à 4 M, en particulier 1 M.

13. Procédé selon l'une quelconque des revendications 10 à 12, dans lequel les principaux contaminants chimiques sont sélectionnés dans le groupe consistant en Ag, Al, As, Be, Bi, Ca, Cd, Co, Cr, Cu, Fe, Ga, K, Li, Mg, Mn, Na, Ni, Pb, Sr, V, Zn, ainsi que les mélanges de ceux-ci.

14. Procédé selon l'une quelconque des revendications 10 à 13, dans lequel l'acide minéral à molarité élevé est de 1 à 8 M, de préférence de 2 à 6 M, plus préférentiellement d'environ 4 M, et en tant qu'acide minéral préféré, HNO₃ est utilisé.

15. Procédé selon l'une quelconque des revendications 10 à 14, dans lequel l'échangeur de cations est une résine échangeuse de cations de type macroporeuse acide selon la formule suivante : 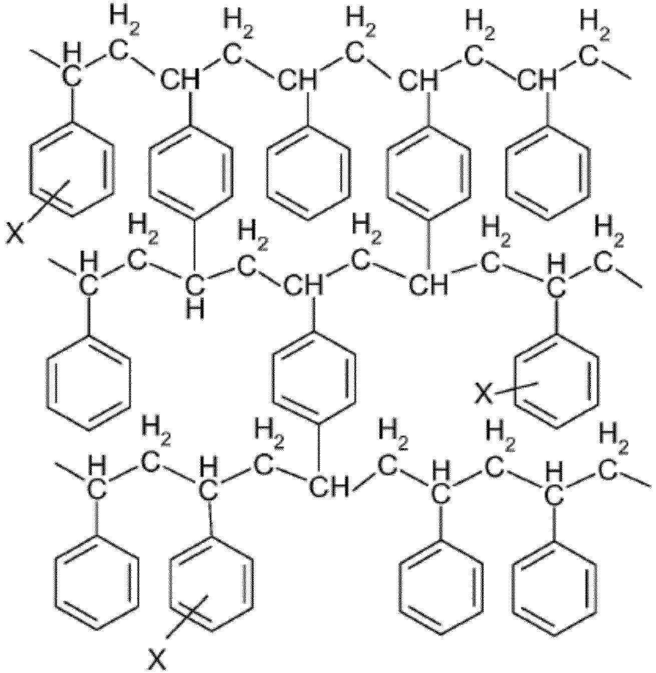 dans laquelle X est SO₃⁻H⁺.

16. Procédé selon l'une quelconque des revendications 10 à 15 dans lequel le système d'agent d'extraction est un éther couronne selon la formule III : 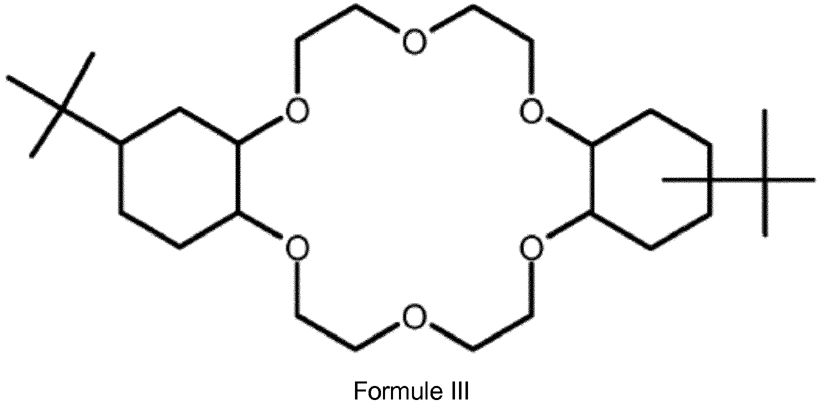 dans le 1-octanol.

17. Procédé selon la revendication 16, dans lequel le système d'agent d'extraction est le 4,4'-bis(t-butylcyclohexano)-18-crown-6 dans le 1-octanol ou est le 4,5'-bis(t-butylcyclohexano)-18-crown- 6 dans le 1-octanol.

18. Procédé selon l'une quelconque des revendications 10 à 17, dans lequel le support solide dans la caractéristique h) de la revendication 10 est sélectionné dans le groupe consistant en une silice poreuse et les polymères organiques inertes, de préférence un polymère non ionique d'ester acrylique.

19. Procédé selon l'une quelconque des revendications 10 à 18, dans lequel lesdites étapes de concentration sont effectuées par évaporation, et dans lequel le produit de désintégration ²²²Rn est éliminé du matériau de Ra en utilisant des pièges à charbon actif.
